(19) Europäisches Patentamt
European Patent Office
Office européen des brevets

(11) EP 4 428 186 A1

(12) **EUROPEAN PATENT APPLICATION**
published in accordance with Art. 153(4) EPC

(43) Date of publication:
11.09.2024 Bulletin 2024/37

(21) Application number: 22890231.8

(22) Date of filing: 20.10.2022

(51) International Patent Classification (IPC):
C08K 3/26 (2006.01)        C08K 5/098 (2006.01)
C08K 5/10 (2006.01)        C08K 5/103 (2006.01)
C08L 67/02 (2006.01)

(52) Cooperative Patent Classification (CPC):
C08J 5/18; C08K 3/26; C08K 5/00; C08K 5/098;
C08K 5/10; C08K 5/103; C08K 5/13; C08K 5/49;
C08L 1/02; C08L 67/02; C08L 67/04

(86) International application number:
PCT/KR2022/016055

(87) International publication number:
WO 2023/080496 (11.05.2023 Gazette 2023/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.11.2021 KR 20210149234

(71) Applicant: SKC Co., Ltd.
Suwon-si, Gyeonggi-do 16338 (KR)

(72) Inventors:
• HAN, Kweon Hyung
Suwon-si, Gyeonggi-do 16338 (KR)
• JANG, Kwangho
Suwon-si, Gyeonggi-do 16338 (KR)
• LEE, Seokin
Suwon-si, Gyeonggi-do 16338 (KR)
• LEE, Deuk-Young
Suwon-si, Gyeonggi-do 16338 (KR)

(74) Representative: Dehns
St. Bride's House
10 Salisbury Square
London EC4Y 8JD (GB)

(54) **BIODEGRADABLE RESIN COMPOSITION HAVING HIGH CALCIUM CARBONATE CONTENT**

(57) Embodiments relate to a biodegradable resin composition having a high calcium carbonate content, a biodegradable polyester film, and a method for preparing same, and provide: a biodegradable resin composition which, while having a high calcium carbonate content, maintains excellent tensile strength and elongation, has excellent biodegradability and the effect of preventing soil from being acidified, and enables a reduction in production costs; a biodegradable polyester film; a biodegradable polyester sheet; and a method for preparing same.

[Fig. 1]

Processed by Luminess, 75001 PARIS (FR)

## Description

### Technical Field

Embodiments relate to a biodegradable resin composition containing a high content of calcium carbonate, to a biodegradable polyester film, to a biodegradable polyester sheet, and to processes for preparing the same.

### Background Art

In recent years, as concerns about environmental issues have increased, there is a need for a solution to the problem of dealing with various household products, in particular, disposable products. Specifically, although polymer materials, which are inexpensive and have excellent processability, are widely used to manufacture various products such as films, fibers, packaging materials, bottles, and containers, when the lifespan of these products is over, harmful substances are discharged when they are incinerated, and it takes hundreds of years depending on their types to completely decompose naturally.

In order to overcome the limitations of these polymers, studies on biodegradable polymers that can be decomposed in a relatively short period of time are being actively conducted. Poly(lactic acid) (PLA), polybutyleneadipate terephthalate (PBAT), and polybutylene succinate (PBS) are introduced as biodegradable polymers.

However, poly(lactic acid) as an aliphatic polyester has good mechanical properties, whereas it lacks flexibility attributed to its inherent crystal structure. Polybutylene adipate terephthalate as an aromatic aliphatic polyester has poor mechanical properties such as strength; thus, its use is limited.

In order to improve these problems, US Patent No. 9,096,758 discloses a biodegradable polyester foil with improved tear propagation characteristics by mixing a composition comprising PBAT, PBSet, PBAzt, PBST, or the like with a low content of calcium carbonate. These biodegradable polyester foils have limitations in that their physical properties are deteriorated when the content of calcium carbonate is increased, and high energy consumption is required in the process of preparing the polyester foils, resulting in an increased production cost and a reduced production efficiency.

[Prior Art Document]

[Patent Document]

(Patent Document 1) US Patent No. 9,096,758

## Disclosure of Invention

### Technical Problem

Accordingly, the embodiments aim to provide a biodegradable resin composition capable of maintaining excellent tensile strength and elongation, as well as excellent biodegradability, soil acidification prevention effect, and reduced production cost, while containing a high content of calcium carbonate, a biodegradable polyester film, a biodegradable polyester sheet, and processes for preparing the same.

### Solution to Problem

According to an embodiment, there is provided a biodegradable resin composition, which comprises a biodegradable polyester resin and calcium carbonate (CaCOs), wherein the reduction rate of crystal peak represented by the following Equation 1 is 50% or more.

According to another embodiment, there is provided a biodegradable polyester film, which comprises a biodegradable resin composition comprising a biodegradable polyester resin and calcium carbonate (CaCOs), wherein the reduction rate of crystal peak of the biodegradable resin composition represented by the following Equation 1 is 50% or more.

According to another embodiment, there is provided a biodegradable polyester sheet, which comprises a biodegradable resin composition comprising a biodegradable polyester resin and calcium carbonate (CaCOs), wherein the reduction rate of crystal peak of the biodegradable resin composition represented by the following Equation 1 is 50% or more.

$$[\text{Equation 1}]$$

$$\text{Reduction rate of crystal peak} = (R_p - C_p)/R_p$$

In Equation 1, $R_p$ is the heat of crystal fusion (J/g) of the biodegradable polyester resin in the temperature range of 70 to 90°C as measured using a differential scanning calorimeter (DSC) while the temperature is elevated from 40°C to 180°C at a rate of 10°C/minute and then lowered to -50°C at a rate of 10°C/minute, and $C_p$ is the heat of crystal fusion (J/g) of the biodegradable resin composition as measured under the same conditions as above.

**Advantageous Effects of Invention**

In the biodegradable resin composition according to an embodiment, which comprises inexpensive calcium carbonate in a high content, it is possible to reduce the production cost and to further improve its biodegradability through an increase in the biodegradation starting point and the promotion of chemical decomposition reactions.

In addition, the acidification of soil can be prevented by neutralizing acid components formed during the decomposition of a product comprising a biodegradable resin composition.

In the biodegradable resin composition according to an embodiment, which comprises calcium carbonate in a high content, it is possible to change the fluidity characteristics of the polymer, thereby adjusting the glass transition temperature (Tg) and crystal peak of the biodegradable resin composition.

Although the biodegradable resin composition according to an embodiment comprises calcium carbonate in a high content, it is possible to maintain the isothermal weight loss rate at a low level and to maintain the content of calcium carbonate at a high level even during high-temperature processing.

In a molded article prepared from the biodegradable resin composition according to another embodiment, particularly a biodegradable polyester film, it is possible to maintain tensile strength, elongation, and tear strength at least at a certain level although a biodegradable polyester resin is contained in a low content.

**Brief Description of Drawings**

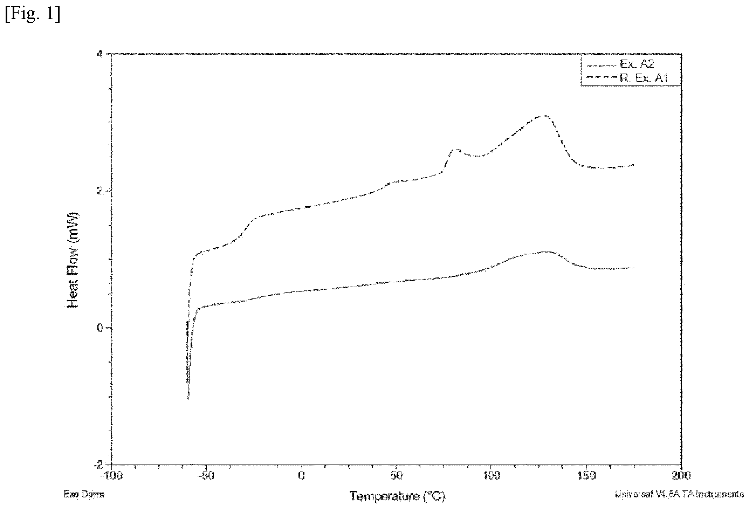

Fig. 1 is a result of differential scanning calorimetry analysis of the biodegradable resin compositions of the Example and Reference Example.

**Best Mode for Carrying out the Invention**

Hereinafter, the present invention will be described in detail with reference to embodiments. The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

**Biodegradable resin composition**

According to an embodiment, there is provided a biodegradable resin composition, which comprises a biodegradable polyester resin and calcium carbonate (CaCOs), wherein the reduction rate of crystal peak represented by the following Equation 1 is 50% or more.

$$[\text{Equation 1}]$$

$$\text{Reduction rate of crystal peak} = (R_p - C_p)/R_p$$

In Equation 1, $R_p$ is the heat of crystal fusion (J/g) of the biodegradable polyester resin in the temperature range of 70 to 90°C as measured using a differential scanning calorimeter (DSC) while the temperature is elevated from 40°C to 180°C at a rate of 10°C/minute and then lowered to -50°C at a rate of 10°C/minute.

$C_p$ is the heat of crystal fusion (J/g) of the biodegradable resin composition as measured under the same conditions as above.

**Biodegradable polyester resin**

The biodegradable polyester resin comprises a first repeat unit and a second repeat unit, wherein the first repeat unit comprises a diol component and an aromatic dicarboxylic acid component, and the second repeat unit comprises a diol component and an aliphatic dicarboxylic acid component.

Diol component

The diol component comprises 1,4-butanediol or a derivative thereof.

Specifically, the diol component may comprise 1,4-butanediol or a derivative thereof in an amount of 95% by mole or more, 97% by mole or more, 98% by mole or more, 99% by mole or more, or 100% by mole, based on the total number of moles of the diol component.

As the diol component comprises 1,4-butanediol or a derivative thereof, it is possible to enhance the biodegradability, flexibility, and strength. In particular, if the diol component is composed of 1,4-butanediol only, it is possible to maximize the biodegradability and the enhancement effect of strength.

If necessary, the diol component may further comprise a second diol different from the first diol, which is 1,4-butanediol or a derivative thereof.

The second diol may be one or more selected from the group consisting of propanediol, hexanediol, cyclohexanedimethanol, and ethylene glycol. Specifically, the second diol may be one or more selected from the group consisting of 1,3-propanediol, 1,2-propanediol, 1,2-hexanediol, 1,3-hexanediol, 1,4-hexanediol, 1,6-hexanediol, 2,3-hexanediol, 2,4-hexanediol, 2,5-hexanediol, 2,6-hexanediol, 3,4-hexanediol, 1,2-cyclohexanedimethanol, 1,3-cyclohexanedimethanol, 1,4-cyclohexanedimethanol, and ethylene glycol.

In addition, the diol component may further comprise the second diol in an amount of 5% by mole or less, 3% by mole or less, 2% by mole or less, or 1% by mole or less, based on the total number of moles of the diol component.

Dicarboxylic acid component

The dicarboxylic acid component of the present invention comprises an aliphatic dicarboxylic acid component and an aromatic dicarboxylic acid component.

The aromatic dicarboxylic acid component is one or more selected from the group consisting of terephthalic acid, dimethyl terephthalic acid, and a derivative thereof.

The aliphatic dicarboxylic acid component is one or more selected from the group consisting of adipic acid, succinic acid, and a derivative thereof.

Specifically, the aromatic dicarboxylic acid component may be terephthalic acid or dimethyl terephthalic acid, and the aliphatic dicarboxylic acid component may be adipic acid or succinic acid.

The dicarboxylic acid component may comprise the aromatic dicarboxylic acid component in an amount of 15% by mole or more, 30% by mole or more, 45% by mole or more, 50% by mole or more, 75% by mole or more, 30% by mole to 90% by mole, 35% by mole to 80% by mole, 40% by mole to 75% by mole, 45% by mole to 65% by mole, or 45% by mole to 55% by mole, based on the total number of moles of the dicarboxylic acid component.

In addition, the dicarboxylic acid component may comprise the aliphatic dicarboxylic acid component in an amount of 15% by mole or more, 30% by mole or more, 45% by mole or more, 50% by mole or more, 75% by mole or more, 30% by mole to 90% by mole, 35% by mole to 80% by mole, 40% by mole to 75% by mole, 45% by mole to 65% by mole, or 45% by mole to 55% by mole, based on the total number of moles of the dicarboxylic acid component.

The molar ratio of the aromatic dicarboxylic acid component and the aliphatic dicarboxylic acid component may be 0.5 to 1.5:1, 0.7 to 1.3:1, or 0.8 to 1.2:1. As the molar ratio of the aromatic dicarboxylic acid component and the aliphatic dicarboxylic acid component satisfies the above range, it is possible to enhance the biodegradability and processability.

In addition, the molar ratio of the diol component and the dicarboxylic acid component may be 0.5 to 2:1. For example, the molar ratio of the diol component and the dicarboxylic acid component may be 0.5 to 1.8:1, 0.7 to 1.5:1, or 0.9 to 1.2:1. As the molar ratio of the diol component and the dicarboxylic acid component satisfies the above range, it is possible to enhance all of the biodegradability, strength, and processability without discoloration such as yellowing.

Nanocellulose

The biodegradable polyester resin of the present invention may further comprise nanocellulose.

The nanocellulose is a natural nanocellulose in the form of a gel or dry powder. It is possible to enhance all of the dispersion stability, strength, and processability of a biodegradable polyester resin comprising the nanocellulose.

The biodegradable polyester resin may comprise nanocellulose in an amount of 0.01 to 3% by weight based on the total weight of the biodegradable polyester resin. For example, the content of the nanocellulose may be 0.01 to 2.5% by weight, 0.05 to 2% by weight, 0.07 to 1.8% by weight, 0.1 to 1.2% by weight, 0.1 to 1% by weight, or 0.15 to 0.7% by weight, based on the total weight of the biodegradable polyester resin. As the content of the nanocellulose satisfies the above range, the biodegradability and strength can be further enhanced.

The nanocellulose may be in the form of a dry powder or gel having secondary particles aggregated to a particle size of 1 $\mu$m to 50 $\mu$m. For example, the nanocellulose may be in the form of a dry powder or gel having agglomerated secondary particles rather than single particles, wherein the size of the secondary particles may be 2 $\mu$m to 45 $\mu$m or 5 $\mu$m to 50 $\mu$m. In addition, the nanocellulose may be in the form of lyophilized powder to reduce its volume for convenient storage and transportation.

The nanocellulose may have a diameter of 1 nm to 100 nm. For example, the diameter of the nanocellulose may be 1 nm to 95 nm, 5 nm to 90 nm, 10 nm to 80 nm, 5 nm to 60 nm, or 15 nm to 60 nm.

In addition, the nanocellulose may have a length of 5 nm to 10 $\mu$m. For example, the length of the nanocellulose may be 5 nm to 5 $\mu$m, 5 nm to 1 $\mu$m, 10 nm to 700 nm, 20 nm to 500 nm, 60 nm to 300 nm, 80 nm to 200 nm, or 100 nm to 250 nm.

As the diameter and length of the nanocellulose satisfy the above ranges, the strength, in particular, tear strength can be further enhanced.

In addition, the nanocellulose may function as a crystal nucleating agent, thereby enhancing the crystallization rate of the biodegradable resin composition and raising the crystallization temperature of the biodegradable resin composition.

The nanocellulose may be one or more selected from the group consisting of cellulose nanocrystals, cellulose nanofibers, and microfibrillated cellulose. Cellulose nanocrystals or cellulose nanofibers are preferred from the viewpoint of strength and thermal characteristics. If the nanocellulose is employed in the biodegradable polyester resin, it is possible to further enhance the biodegradability, strength, and thermal characteristics.

The biodegradable resin composition comprising the nanocellulose may have appropriate UV resistance characteristics, biodegradation rate, and hydrolysis rate.

More specifically, the nanocellulose may be one or more selected from the group consisting of hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

The nanocellulose according to an embodiment may have an average particle size of 200 nm or less and a particle size deviation of 20% or less. Specifically, the average particle size of the nanocellulose dispersed in water may be 190 nm or less or 185 nm or less, and the particle size deviation may be 18% or less or 16% or less. As the average particle size and particle size deviation of the nanocellulose satisfy the above ranges, both the dispersibility and durability of the nanocellulose are excellent.

According to another embodiment, the nanocellulose may be pretreated with a bead mill or pretreated with ultrasonic waves. Specifically, the nanocellulose may be obtained by pretreating nanocellulose dispersed in water with a bead mill or ultrasonic waves.

For example, the nanocellulose may be prepared by dispersing cellulose nanocrystals in the form of a dry powder or gel with a particle size of 1 $\mu$m to 50 $\mu$m in water and then pretreating them with a bead mill or ultrasonic waves.

If the nanocellulose, specifically the nanocellulose dispersed in water, is pretreated with a bead mill or pretreated with ultrasonic waves, the number of nanocellulose particles can be increased, whereby the dispersibility can be maximized.

In addition, the nanocellulose may be pretreated with a silane coupling agent in an amount of 0.01 to 10% by weight based on the total weight of the nanocellulose. For example, the nanocellulose may be pretreated with a silane coupling agent in an amount of 0.05 to 8% by weight, 0.1 to 8% by weight, 0.5 to 6% by weight, or 0.7 to 6% by weight, based on the total weight of the nanocellulose.

As the content of a silane coupling agent satisfies the above range, it is possible to maximize the interfacial adhesion, dispersibility, and compatibility. Thus, the biodegradable polyester resin comprising the same can be further enhanced in mechanical properties and durability, in particular, hydrolysis resistance.

Calcium carbonate (CaCO$_3$)

The biodegradable resin composition according to an embodiment comprises calcium carbonate in an amount of 30 to 80% by weight based on the total weight of the biodegradable resin composition.

For example, the biodegradable resin composition may comprise calcium carbonate ($CaCO_3$) in an amount of 30.5% by weight or more, 35% by weight or more, 45% by weight or more, 50% by weight or more, 55% by weight or more, 60% by weight or more, 65% by weight or more, 70% by weight or more, 75% by weight or more, 30 to 70% by weight, 40 to 75% by weight, 45 to 70% by weight, 30 to 45% by weight, 45 to 55% by weight, 45 to 49% by weight, 55 to 65% by weight, 60 to 75% by weight, 65 to 72% by weight, 60 to 70% by weight, or 65 to 70% by weight, based on the total weight of the biodegradable resin composition.

If the biodegradable resin composition comprises calcium carbonate in the above range, it is possible to reduce the production cost as calcium carbonate that is readily available and inexpensive is used in a high content, to further enhance the biodegradability by increasing the biodegradation starting point, and to prevent deterioration of the physical properties of a product by enhancing the dispersibility despite the high content of calcium carbonate.

In addition, when an article molded from a biodegradable resin composition is decomposed, an acidic component is generated. Since the acidic component and calcium carbonate react to generate carbon dioxide gas and water, the biodegradation rate in molecular units can be further enhanced, and calcium carbonate neutralizes the acidic component as shown in the following Reaction Scheme 1, thereby reducing environmental load and preventing soil acidification.

$$[\text{Reaction Scheme 1}] \qquad CaCO_3\ (s) + 2H^+\ (aq) \rightarrow CO_2\ (g) + H_2O\ (1) + Ca^{2+}\ (aq)$$

Calcium carbonate may be natural calcium carbonate obtained by mechanically pulverizing or classifying natural calcium carbonate whose main component is $CaCO_3$, such as limestone, chalk, marble, shell, coral, and the like. It may be synthetic calcium carbonate produced by a chemical precipitation reaction or the like. Natural calcium carbonate is preferred from the viewpoint of increasing the surface area between the biodegradable particles and calcium carbonate and increasing the efficiency of biodegradation.

In addition, in order to increase the dispersibility or reactivity of calcium carbonate, the surface of calcium carbonate may be modified through physical treatment or chemical treatment. For example, the physical surface modification method may be plasma treatment, corona treatment, or the like; and the chemical surface modification method may be surface treatment with a coupling agent such as a silane coupling agent or titanium coupling agent or a surfactant.

The particle size of calcium carbonate is calculated from the measurement result of the specific surface area by the air permeation method using a specific surface area measuring device. The average particle diameter may be 0.1 $\mu$m to 10.0 $\mu$m, specifically, 0.5 $\mu$m to 5.0 $\mu$m or 1.0 $\mu$m to 3.0 $\mu$m.

If the particle size of calcium carbonate is within the above range, when the biodegradable polyester resin and calcium carbonate are kneaded, the viscosity may be maintained within a certain range, and the uniformity of particle size may be increased, thereby facilitating the production of molded articles.

The specific surface area of calcium carbonate is measured by the nitrogen gas adsorption method. The specific surface area may be 0.1 $m^2$/g to 10.0 $m^2$/g, specifically, 0.2 $m^2$/g to 5.0 $m^2$/g or 1.0 $m^2$/g to 3.0 $m^2$/g.

If the specific surface area of calcium carbonate is within the above range, the surface area for biodegradable reactions of the biodegradable polyester resin in an article molded from the biodegradable resin composition is broadened, thereby favorably promoting the biodegradability in a natural environment, and the deterioration in processability of the biodegradable resin composition due to blending of calcium carbonate can be reduced.

The degree of irregularity of calcium carbonate is indicated based on the sphericity of calcium carbonate. The sphericity of calcium carbonate may be 0.30 to 0.95, 0.50 to 0.93, or 0.60 to 0.90.

If the sphericity of calcium carbonate is within the above range, there may be a lot of fine voids caused by very weak adhesion or non-adhesion at the interface between the biodegradable polyester resin and calcium carbonate, thereby favorably promoting the biodegradability in a natural environment, and the strength and molding processability as a product may not be deteriorated.

Additive

If necessary, it is also possible to mix an additive as a supplement to the biodegradable resin composition of the present invention.

Examples of the additive may include fillers, lubricants, plasticizers, colorants, antioxidants, flame retardants, foaming agents, and chain extenders, in addition to calcium carbonate. For example, additives that can be generally added to biodegradable polyester resin compositions such as coupling agents, fluidity enhancing agents, dispersants, UV absorbers, stabilizers, and antistatic agents. These additives may be used alone or in combination of two or more. Preferably, the biodegradable resin composition may further comprise at least one selected from the group consisting of a lubricant, a plasticizer, an antioxidant, a chain extender, and a dispersant.

For example, the biodegradable resin composition comprises a plasticizer and an antioxidant.

Additives may be blended in a kneading process or may be blended into the biodegradable resin composition before the kneading process.

In the biodegradable resin composition of the present invention, the amount of the additives added is not particularly limited as long as it is within the range capable of achieving the effect of the present invention. The amount of the additives may be 0.01 to 5% by weight, respectively, based on the total weight of the biodegradable resin composition. It is preferable that the total weight of the additives is 10% by weight or less based on the total weight of the biodegradable resin composition.

Examples of the filler other than calcium carbonate include magnesium carbonate, zinc oxide, titanium oxide, silica, alumina, clay, talc, kaolin, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, carbon black, zeolite, molybdenum, diatomaceous earth, sericite, white sand, calcium sulfite, sodium sulfate, potassium titanate, bentonite, and graphite.

Examples of the lubricant include a fatty acid-based lubricant including stearic acid, an aliphatic alcohol-based lubricant, an aliphatic amide-based lubricant including stearoamide, n-butyl stearate, methyl hydroxystearate, a polyhydric alcohol fatty acid ester, an aliphatic ester-based lubricant such as saturated fatty acid esters, fatty ester-based lubricants, and a fatty acid metal soap-based lubricant.

The lubricant may be a stearate-based lubricant, and it may comprise at least one selected from the group consisting of calcium stearate, zinc stearate, barium stearate, magnesium stearate, glycerin stearate, and butyl stearate.

The stearate-based lubricant reduces heat generation due to friction during mixing, melting, and processing of raw materials. It has an excellent dispersion effect for biodegradable polyester resins as compared with its cost and an excellent lubricating effect, thereby improving the production efficiency.

The content of the lubricant may be 5% by weight or less, 1% by weight or less, less than 1% by weight, 0.9% by weight or less, 0.8% by weight or less, 0.7% by weight or less, 0.5% by weight or less, 0.3% by weight or less, or 0.1% by weight or less, based on the total weight of the biodegradable resin composition.

The lubricant may be employed in an amount of 0.1 to 1% by weight, specifically, 0.1 to 0.5% by weight or 0.2 to 0.3% by weight, based on the total weight of the biodegradable resin composition.

If the content of the lubricant is within the above range, it is possible to enhance the production efficiency of the biodegradable resin composition without impairing the physical properties of the biodegradable resin composition.

A plasticizer may be added to impart processability or flexibility to a molded article thus obtained. It may be glycerol, acrylate, glycerin, glycerol monostearate (GMS), sorbitol, or a mixture thereof.

In the biodegradable resin composition of the present invention, the content of the plasticizer is not particularly limited as long as it is within the range that can achieve the effect of the present invention. The plasticizer may be employed in an amount of 0 to 15% by weight, specifically, 0 to 13% by weight, 0.1 to 3% by weight, 4 to 11% by weight, 8 to 11% by weight, 4 to 8% by weight, 2 to 4% by weight, 1 to 3% by weight, or 1 to 2% by weight, based on the total weight of the biodegradable resin composition.

If the content of the plasticizer is within the above range, the elongation and tear resistance of an article molded from the biodegradable resin composition may be enhanced.

As the colorant, an organic or inorganic pigment or a dye may be used. Specifically, organic pigments such as azo-based, anthraquinone-based, phthalocyanine-based, quinacridone-based, isoindolinone-based, dioxazine-based, perinone-based, quinophthalone-based, and perylene-based pigments, and inorganic pigments such as ultramarine blue, titanium oxide, titanium yellow, iron oxide, chromium oxide, zinc oxide, and carbon black may be used.

The antioxidant may be selected from the group consisting of a phosphorus-based antioxidant, a phenol-based antioxidant, or a pentaerythritol-based antioxidant. Each antioxidant may be used alone or in combination of two or more thereof. When two or more kinds of antioxidants are employed, a mixture of a phosphorus-based antioxidant and a phenol-based antioxidant may be preferably used to obtain functional effects in various temperature ranges.

Examples of the phosphorus-based antioxidant include triesters, diesters, monoesters of phosphorous acid such as triphenyl phosphite, trisnonylphenyl phosphite, and tris(2,4-di-t-butylphenyl) phosphite, trimethyl phosphate, triethyl phosphate, tributyl phosphate, trioctyl phosphate, triphenyl phosphate, tricresyl phosphate, tris(nonylphenyl)phosphate, and 2-ethylphenyl diphenyl phosphate.

Examples of the phenol-based antioxidant include $\alpha$-tocopherol, butylhydroxytoluene, cinafil alcohol, vitamin E, n-octadecyl-3-(3,5-di-t-butyl-4-hydroxyphenyl)propionate, 2-t-butyl-6-(3 '-t-butyl-5 '-methyl-2'-hydroxybenzyl)-4-methylphenyl acrylate, 2,6-di-t-butyl-4-(N,N-dimethylaminomethyl)phenol, 3,5-di-t-butyl-4-hydroxybenzyl phosphonate diethyl ester, 2,2-bis(((3-(3,5-di-tert-butyl-4-hydroxyphenyl)propanoyl)oxy)methyl)propane-1,3-diyl bis(3-(3,5-di-tert)-butyl-4-hydroxyphenyl)propanoate), pentaerythritol tetrakis(3,5-di-tert-butyl-4-hydroxyhydrocinnamate), pentaerythritol tetrakis [3 -(3,5 -di-tert-butyl-4-hydroxyphenyl) propionate], and tetrakis[3-(3,5-di-t-butyl-4-hydroxyphenyl)propionyloxymethyl]methane.

In addition, at least one antioxidant selected from the group consisting of BHT, ascorbic acid, catechin, quercetin, dodecyl gallate, TBHQ, Ralox, Irganox 1135, Irganox 1076, nordihydroguaiaretic acid, epicatechin gallate, epigallocatechin gallate, epigallocateine, propyl gallate, 2,3,5-trihydroxybutyrophenone, butylated hydroxyanisole, 4-hydroxymethyl-2,6-di-tert-butylphenol, $\alpha$-tocopherol, resveratrol, rutin, astaxatin, lycopene, beta-carotene, and melatonin may be used.

The antioxidant may be employed in an amount of 5% by weight or less, 3% by weight or less, 2% by weight or less, 1.5% by weight or less, 1% by weight or less, 0.5% by weight or less, 0.3% by weight or less, 0 to 5% by weight, 0.01 to 4% by weight, 0.1 to 3% by weight, 1 to 3% by weight, 1 to 2% by weight, 0.01 to 0.3% by weight, or 0.05 to 0.3% by weight, based on the total weight of the biodegradable resin composition.

If the antioxidant comprises both a phosphorus-based antioxidant and a phenol-based antioxidant, the weight ratio of the phosphorus-based antioxidant and the phenol-based antioxidant may be 1:10 to 10:1, 1:5 to 5:1, 1:1 to 5:1, 2:1 to 4:1, 2.5:1 to 3.5:1, 1:5 to 1:1, 1:2 to 1:4, or 1:2.5 to 1:3.5.

If a mixture of the phosphorus-based antioxidant and the phenol-based antioxidant is used within the above range, desired effects can be obtained in various temperature ranges.

A halogen-based flame retardant, a phosphorus-based flame retardant, or a non-phosphorus halogen-based flame retardant such as a metal hydrate may be used as the flame retardant.

Examples of the halogen-based flame retardants include halogenated bisphenol compounds such as halogenated bisphenyl alkanes, halogenated bisphenyl ethers, halogenated bisphenyl thioethers, and halogenated bisphenyl sulfones, and bisphenol-bis(alkyl ether) compounds such as brominated bisphenol A, brominated bisphenol S, chlorinated bisphenol A, and chlorinated bisphenol S.

Examples of the phosphorus-based flame retardants include tris(diethyl phosphinic acid)aluminum, bisphenol A bis(diphenyl phosphate), triaryl isopropyl phosphate, cresyl di-2,6-xylenyl phosphate, and aromatic condensed phosphoric acid esters.

Examples of the metal hydrate include aluminum trihydrate, magnesium dihydroxide, and combinations thereof.

Antimony oxides such as antimony trioxide and antimony pentoxide, zinc oxide, iron oxide, aluminum oxide, molybdenum oxide, titanium oxide, calcium oxide, magnesium oxide, or the like may be used as flame retardant aids to enhance the flame retardant effect.

A foaming agent is added or injected by applying pressure to the biodegradable resin composition in a molten state. It is one that changes its phase from solid to gas, from liquid to gas, or gas itself, and is used to control the foaming ratio (foaming density) of a foam sheet.

Examples of the foaming agent include aliphatic hydrocarbons such as propane, butane, pentane, hexane, and heptane; alicyclic hydrocarbons such as cyclobutane, cyclopentane, and cyclohexane; halogenated hydrocarbons such as chlorodifluoromethane, difluoromethane, trifluoromethane, trichlorofluoromethane, dichloromethane, dichlorofluoromethane, dichlorodifluoromethane, chloromethane, chloroethane, dichlorotrifluoroethane, dichloropentafluoroethane, tetrafluoroethane, difluoroethane, pentafluoroethane, trifluoroethane, dichlorotetrafluoroethane, trichlorotrifluoroethane, tetrachlorodifluoroethane, and perfluorocyclobutane; inorganic gases such as carbon dioxide, nitrogen, and air; and water.

A dispersant is used to increase the dispersibility of a solvent and solute. The dispersant may be, as an aliphatic polyester, at least one selected from the group consisting of poly(lactic acid) (hereinafter, referred to as PLA), poly(glycolic acid) (hereinafter, referred to as PGA), polycaprolactone (hereinafter, referred to as PCL), and polyhydroxyalkanoate (hereinafter, referred to as PHA), but it is not limited thereto.

The biodegradable resin composition of the present invention further comprises at least one dispersant selected from the group consisting of poly(lactic acid), poly(glycolic acid), polycaprolactone, and polyhydroxyalkanoate.

The content of the dispersant is not particularly limited as long as it is within the range capable of achieving the effect of the present invention. The dispersant may be employed in an amount of 1 to 20% by weight, specifically, 1 to 15% by weight, 1 to 13% by weight, 1 to 11% by weight, 2 to 10% by weight, 5 to 15% by weight, 7 to 12% by weight, 2 to 8% by weight, 5 to 8% by weight, or 2 to 5% by weight, based on the total weight of the biodegradable resin composition.

The chain extender may be aromatic diisocyanates, aliphatic diisocyanates, isocyanurates, bisoxazolines, carboxylic acid anhydrides, or epoxides.

The aromatic diisocyanate comprises tolylene 2,4-diisocyanate, tolylene 2,6-diisocyanate, 2,2'-diphenylmethane diisocyanate, 2,4'-diphenylmethane diisocyanate, 4,4'-diphenylmethane diisocyanate, naphthylene 1,5-diisocyanate, or xylylene diisocyanate. 2,2'-, 2,4'-, and 4,4'-diphenylmethane diisocyanates among the above are particularly preferred.

The aliphatic diisocyanate refers to 1,6-hexamethylene diisocyanate, isophorone diisocyanate, or methylene bis(4-isocyanatocyclohexane). A particularly preferred aliphatic diisocyanate is isophorone diisocyanate, particularly preferably, 1,6-hexamethylene diisocyanate.

The isocyanurate comprises isophorone diisocyanate or methylene bis(4-isocyanatocyclohexane).

The bisoxazoline is 2,2'-bis(2-oxazoline), bis(2-oxazolinyl)methane, 1,2-bis(2-oxazolinyl)ethane, 1,3-bis(2-oxazolinyl)propane, or 1,4-bis(2-oxazolinyl)butane, particularly, 1,4-bis(2-oxazolinyl)benzene, 1,2-bis(2-oxazolinyl)benzene, or 1,3-bis(2-oxazolinyl)benzene.

The epoxide refers to an epoxy-containing copolymer based on styrene, an acrylic acid ester, and/or a methacrylic acid ester. Preferred is a copolymer having a copolymer content of greater than 20%, greater than 30%, or greater than 50% by weight of gricidyl(meth)acrylate. It has an epoxy equivalent weight (EEW) of 150 to 3,000 g/eq or 200 to 500 g/eq. It has a weight average molecular weight (Mw) in the range of 2,000 to 25,000 or 3,000 to 8,000, a number average molecular weight (Mn) in the range of 400 to 6,000 or 1,000 to 4,000, and a polydispersity (Q) of 1.5 to 5 in general. The epoxide is commercially available as Joncryl® ADR from BASF Resins B.V.

The chain extender may be employed in an amount of 1.5% by weight or less, 1% by weight or less, 0.5% by weight or less, 0.3% by weight or less, 0 to 1.5% by weight, 0.01 to 1% by weight, 0.1 to 1% by weight, 0.01 to 0.5% by weight, 0.01 to 1% by weight, or 0.1 to 0.5% by weight, based on the total weight of the biodegradable resin composition.

The content of COOH terminal groups in the biodegradable polyester resin may be 10 to 50 $eq/10^6$ gr, 15 to 40 $eq/10^6$ gr, or 20 to 30 $eq/10^6$ gr.

In the differential scanning calorimetry (DSC) method, qualitative information is obtained from the location, shape, and number of peaks by measuring the flow of heat related to thermal transitions of a sample using a differential scanning calorimeter, and quantitative information (glass transition temperature (Tg), cold crystallization temperature (Tcc), crystallization temperature (Tmc), melting temperature (Tm), and the like) of the calorific change may be obtained from the area of the peak.

When the biodegradable polyester resin is measured by differential scanning calorimetry with DSC temperature elevation, a crystal melting temperature curve is obtained in which the glass transition temperature is measured at about -20°C, a crystal peak (heat of crystal fusion of 1 to 5 J/g or 1 to 3 J/g) attributed to butanediol appears in the temperature range of 70 to 90°C, and a crystal peak (heat of crystal fusion of 5 to 20 J/g or 13 to 17 J/g) attributed to the biodegradable polyester resin (PBAT) itself is detected in the temperature range of 100 to 150°C.

When the biodegradable polyester resin of the present invention is measured by differential scanning calorimetry with DSC temperature elevation, the reduction rate of crystal peak according to Equation 1 in the temperature range of 70 to 90°C is 50% or more, 70% or more, 80% or more, 85% or more, 90% or more, 95% or more, 97% or more, 99% or more, or 100%. This means that the crystal peak attributed to butanediol is significantly reduced in the measurement with DSC temperature elevation of the biodegradable resin composition. This indicates that, in the biodegradable resin composition containing an excessive amount of calcium carbonate, the formation of crystals attributed to butanediol itself is prevented by calcium carbonate as an inorganic substance, resulting in a change in the crystal behavior.

When the biodegradable polyester resin of the present invention is measured by differential scanning calorimetry with DSC temperature elevation, the reduction rate of crystal peak according to Equation 1A in the temperature range of 100 to 150°C may be 15% or more, 24% or more, 30% or more, 45% or more, 50% or more, 60% or more, 70% or more, 75% or more, 80% or more, 85% or more, or 90% or more, for example, 45% to 98%, 45% to 96%, or 50% to 90%.

[Equation 1A]

$$\text{Reduction rate of crystal peak} = (R_{p1} - C_{p1})/R_{p1}$$

In Equation 1A, $R_{p1}$ is the heat of crystal fusion (J/g) of the biodegradable polyester resin in the temperature range of 100 to 150°C as measured using a differential scanning calorimeter (DSC) while the temperature is elevated from 40°C to 180°C at a rate of 10°C/minute and then lowered to -50°C at a rate of 10°C/minute.

$C_{p1}$ is the heat of crystal fusion (J/g) of the biodegradable resin composition as measured under the same conditions as above.

This means that the crystal peak attributed to the biodegradable polyester resin (PBAT)) itself is significantly reduced in the measurement with DSC temperature elevation of the biodegradable resin composition. It indicates that, in the biodegradable resin composition containing an excess of calcium carbonate, the fluidity of polymer within a certain unit volume may be suppressed due to calcium carbonate as an inorganic substance, which inhibits the formation of crystals attributed to the biodegradable polyester resin itself, resulting in a change in the crystal behavior.

When the biodegradable polyester resin is measured by differential scanning calorimetry, the glass transition temperature (Tg) may be -50°C or higher, -40°C or higher, -30°C or higher, -20°C or higher, -10°C or higher, and may be 30°C or lower, 20°C or lower, or 10°C or lower. It indicates that, in the biodegradable resin composition containing an excess of calcium carbonate, steric hindrance takes place between polymer chains due to calcium carbonate as an inorganic substance, which suppresses the fluidity of polymer chains, resulting in a tendency to raise the glass transition temperature (Tg).

The biodegradable resin composition may have a melting temperature (Tm) of 60°C or higher, 80°C or higher, 90°C or higher, 100°C or higher, or 110°C or higher, and 150°C or lower, 140°C or lower, 130°C or lower, or 120°C or lower.

The biodegradable resin composition may have a crystallization temperature (Tmc) of -10°C or higher, -5°C or higher, or 0°C or higher, and 80°C or lower, 60°C or lower, 50°C or lower, or 40°C or lower.

Fig. 1 shows the results of differential scanning calorimetry analysis with heating measurements twice at a rate of 20°C per minute. In the 100% biodegradable polyester resin (PBAT resin) of Reference Example A1, the glass transition temperature (Tg) was - 24.2°C, the melting temperature (Tm) was 113.9°C, and the crystallization temperature (Tmc) was 33°C, while the cold crystallization temperature (Tcc) was not measured. In addition, the heat of crystal fusion attributed to the butanediol peak was 1 J/g, and the heat of crystal fusion attributed to the biodegradable polyester resin (PBAT) peak was 15 J/g.

In Fig. 1, in the biodegradable resin composition of Example A2 containing 65% of calcium carbonate and 35% of a PBAT resin, the glass transition temperature (Tg) was -23.1°C, the heat of crystal fusion attributed to the butanediol peak was 0.02 J/g, and the heat of crystal fusion attributed to the polyester resin (PBAT) peak itself was 2.5 J/g.

Thermogravimetric analysis (TGA) is an analysis method that continuously measures the weight of a sample as a function of time or temperature while raising the temperature under certain conditions.

When the biodegradable resin composition is maintained at an isothermal temperature of 210°C for 1 hour through TGA analysis, the isothermal weight loss of the biodegradable resin composition may be 5% or less.

Specifically, the isothermal weight loss may be 4% or less, 3% or less, 2.5% or less, 2% or less, 1.5% or less, 1% or less, or 0.5% or less, and 0% or more or 0.1% or more.

The isothermal weight loss is calculated as $(W_0 - W_1)/W_0 \times 100$, which indicates a change between the initial weight ($W_0$) of pellets and the weight ($W_1$) of the pellets after they are left under an isothermal condition of 210°C for 1 hour.

If the isothermal weight loss is within the above range, the thermal resistance of the biodegradable resin composition is ensured, thereby preventing the generation of vapor due to heat during extrusion and the reduction in molecular weight, and mechanical properties can be maintained at a certain level or higher.

When the biodegradable resin composition is heated at a rate of 20°C/minute through TGA analysis, the change in the content of calcium carbonate in the biodegradable resin composition at 600°C may be 5% or less.

Specifically, the change in the content of calcium carbonate may be 4% or less, 3% or less, 2.5% or less, 2% or less, 1.5% or less, 1% or less, or 0.8% or less, and 0% or more or 0.1% or more.

The change in the content of calcium carbonate is calculated as $(W_{c0} - W_{c1})/W_{c0} \times 100$, which indicates a change between the initial weight ($W_{c0}$) of calcium carbonate in pellets of the biodegradable resin composition and the weight ($W_{c1}$) of calcium carbonate in the pellet of the biodegradable resin composition at 600°C when the pellet of the biodegradable resin composition is heated at a rate of 20°C/minute.

When the change in the content of calcium carbonate is within the above range in the TGA analysis, the biodegradable resin composition can maintain a high content of calcium carbonate ($CaCO_3$) even after processing at a high temperature.

## Molded article

According to an embodiment, there is provided an article molded from the biodegradable resin composition.

Specifically, the molded article may be prepared by molding the biodegradable resin composition by a method known in the art such as extrusion or injection, and the molded article may be an injection molded article, an extrusion molded article, a thin film molded article, or a blower molded article, but it is not limited thereto.

For example, the molded article may be in the form of a film or sheet that can be used as agricultural mulching films, disposable gloves, food packaging materials, garbage bags, in the form of a fiber that can be used as fabrics, knitted fabrics, nonwoven fabrics, ropes, or in the form of a container that can be used as a container for food packaging such as a lunch box.

In particular, the molded article may be prepared from the biodegradable resin composition, which can enhance the strength and processability, as well as durability. Thus, it can show excellent properties when applied to packaging materials for products stored and transported at low temperatures, or garbage bags, mulching films, and disposable products that require excellent durability and elongation.

The biodegradable resin composition or a molded article prepared therefrom may be biodegraded by 60% to 100% within 45 to 180 days in a natural state and may be composted at a constant temperature of 20 to 60°C and a constant humidity of 30 to 90%.

### Biodegradable polyester film

A biodegradable polyester film, which is an embodiment of the molded article, comprises the biodegradable resin composition.

The biodegradable polyester film comprises a biodegradable resin composition comprising a biodegradable polyester resin and calcium carbonate (CaCOs), wherein the reduction rate of crystal peak of the biodegradable resin composition represented by Equation 1 is 50% or more.

The biodegradable polyester film may have a thickness of 5 μm to 200 μm. For example, the thickness of the biodegradable polyester film may be 5 μm to 180 μm, 5 μm to 160 μm, 10 μm to 150 μm, 15 μm to 130 μm, 20 μm to 100 μm, 25 μm to 80 μm, 10 μm to 50 μm, 10 μm to 30 μm, or 25 μm to 60 μm.

In addition, the biodegradable polyester film may have a tensile strength of 5 MPa or more. For example, the tensile strength of the biodegradable polyester film may be 7 MPa or more, 9 MPa or more, 10 MPa or more, or 11 MPa or more, and 30 MPa or less, 27 MPa or less, 25 MPa or less, 23 MPa or less, or 21 MPa or less.

If the tensile strength of the biodegradable polyester film is within the above range, it has excellent mechanical properties since it can be stretched within a certain range while containing a high content of calcium carbonate. Thus, it can be used in a variety of ways, and the rate of biodegradation can be further enhanced after biodegradation begins.

In addition, the biodegradable polyester film may have a tear strength of 75 N/mm or more. For example, the tear strength of the biodegradable polyester film may be 75 N/mm or more, 80 N/mm or more, 85 N/mm or more, or 90 N/mm or more, and 200 N/mm or less, 180 N/mm or less, 150 N/mm or less, or 135 N/mm or less.

If the tear strength of the biodegradable polyester film is within the above range, it has excellent mechanical properties since it is not easily torn in a certain direction while containing a high content of calcium carbonate. Thus, it can be used in a variety of ways, and the rate of biodegradation can be further enhanced after biodegradation begins.

The biodegradable polyester film may have an elongation of 85% or more. For example, the elongation of the biodegradable polyester film may be 90% or more or 95% or more, and 700% or less, 650% or less, 600% or less, or 550% or less.

If the elongation of the biodegradable polyester film is within the above range, it is well stretched to some extent, and elasticity can be secured during product packaging, so that it can withstand a certain load.

In addition, the biodegradable polyester film may have a sealing strength of 500 gf or more. For example, the sealing strength of the biodegradable polyester film may be 600 gf or more, 700 gf or more, or 800 gf or more.

Biodegradable polyester sheet

A biodegradable polyester sheet, which is an embodiment of the molded article, comprises the biodegradable resin composition.

The biodegradable polyester sheet comprises a biodegradable resin composition comprising a biodegradable polyester resin and calcium carbonate (CaCOs), wherein the reduction rate of crystal peak of the biodegradable resin composition represented by Equation 1 is 50% or more.

The thickness of the biodegradable polyester sheet may be 5 $\mu$m to 180 $\mu$m, 5 $\mu$m to 160 $\mu$m, 10 $\mu$m to 150 $\mu$m, 15 $\mu$m to 130 $\mu$m, 20 $\mu$m to 100 $\mu$m, 25 $\mu$m to 80 $\mu$m, 10 $\mu$m to 50 $\mu$m, or 10 $\mu$m to 30 $\mu$m.

The biodegradable polyester sheet may have a tensile strength of 5 MPa or more. For example, the tensile strength of the biodegradable polyester sheet may be 6 MPa or more, 9 MPa or more, 10 MPa or more, 11 MPa or more, or 12 MPa or more, and 40 MPa or less, 35 MPa or less, 30 MPa or less, 27 MPa or less, 25 MPa or less, 23 MPa or less, or 21 MPa or less.

If the tensile strength of the biodegradable polyester sheet is within the above range, it has excellent mechanical properties since it can be stretched within a certain range while containing a high content of calcium carbonate. Thus, it can be used in a variety of ways, and the rate of biodegradation can be further enhanced after biodegradation begins.

The biodegradable polyester sheet may have a modulus of 110 MPa to 350 MPa. For example, the modulus of the biodegradable polyester sheet may be 120 MPa to 340 MPa, 150 MPa to 330 MPa, or 200 MPa to 330 MPa.

The biodegradable polyester sheet may have an elongation of 10% or more. For example, the elongation of the biodegradable polyester sheet may be 15% or more, 20% or more, 50% or more, or 70% or more, and 700% or less, 650% or less, 550% or less, 500% or less, or 450% or less.

If the elongation of the biodegradable polyester sheet is within the above range, it is well stretched to some extent, and elasticity can be secured during product packaging, so that it can withstand a certain load.

**Process for preparing a biodegradable polyester film or a biodegradable polyester sheet**

The process for preparing a biodegradable polyester film or a biodegradable polyester sheet according to an embodiment comprises subjecting a diol component and a dicarboxylic acid component to an esterification reaction to prepare a prepolymer; subjecting the prepolymer to a polycondensation reaction to prepare a biodegradable polyester resin (polymer); mixing the biodegradable polyester resin and calcium carbonate to prepare a biodegradable resin composition; preparing pellets from the biodegradable resin composition; and drying and melt-extruding the pellets.

First, a diol component and a dicarboxylic acid component are subjected to an esterification reaction to prepare a prepolymer.

The biodegradable resin composition comprises a diol component comprising 1,4-butanediol or a derivative thereof and at least one dicarboxylic acid component selected from the group consisting of terephthalic acid, dimethyl terephthalic acid, adipic acid, succinic acid, and derivatives thereof, which are subjected to an esterification reaction to prepare a prepolymer.

Details on the diol component, the aromatic dicarboxylic acid component, and the aliphatic dicarboxylic acid component are as described above.

In the step of preparing a prepolymer, it may be prepared by subjecting a composition comprising the diol component, the aromatic dicarboxylic acid component, the aliphatic dicarboxylic acid component, and, optionally, nanocellulose to a one-step esterification reaction or to a two-step esterification reaction of a primary esterification reaction and a secondary esterification reaction.

More specifically, the two-step esterification reaction may comprise (1) subjecting the diol component and the aromatic dicarboxylic acid component to a primary esterification reaction; and (2) adding the diol component and the aliphatic dicarboxylic acid component to the reaction product of step (1) and subjecting them to a secondary esterification reaction.

If the biodegradable polyester resin of the present invention comprises nanocellulose, and if a prepolymer is prepared through the two-step esterification reaction, the nanocellulose may be added in the second esterification reaction step, whereby the binding force of the nanocellulose can be enhanced. Specifically, the addition of the nanocellulose, that is, nanocellulose dispersed in water, in the secondary esterification reaction step may further enhance the durability.

In addition, it is preferable to add the nanocellulose at a temperature of 100°C to 160°C, preferably 110°C to 140°C, from the viewpoint of the enhancement of hydrolysis resistance.

Further, the nanocellulose may be added at a rate of 2 kg/minute to 10 kg/minute, 2.5 kg/minute to 9.5 kg/minute, or 3 kg/minute to 8 kg/minute, to prevent agglomeration along with further enhancement of hydrolysis resistance and to maintain an appropriate process speed. If the addition rate is within the above range, an additional process is unnecessary, process efficiency can be enhanced, and re-agglomeration of nanocellulose can be prevented.

More specifically, the two-step esterification reaction may comprise (1) subjecting the diol component and the aromatic dicarboxylic acid component to a primary esterification reaction; and (2) adding the diol component, the aliphatic dicarboxylic acid component, and the nanocellulose to the reaction product of step (1) and subjecting them to a secondary esterification reaction.

A catalyst such as a titanium-based catalyst, a germanium-based catalyst, and an antimony-based catalyst, an additive, and a stabilizer may be added to the composition before the esterification reaction. Details on the catalyst, the additive, and the stabilizer are as described above.

The esterification reaction may be carried out at 250°C or lower for 0.5 hour to 5 hours, respectively. Specifically, the esterification reaction may be carried out at atmospheric pressure at 240°C or lower, 235°C or lower, 180°C to 250°C, 185°C to 240°C, or 200°C to 240°C, until water and methanol as by-products theoretically reach 90%. For example, the esterification reaction may be carried out for 0.5 hour to 4.5 hours, 0.5 hour to 3.5 hours, or 1 hour to 3 hours, but it is not limited thereto.

The prepolymer may have a number average molecular weight of 500 to 10,000. For example, the number average molecular weight of the prepolymer may be 500 to 8,500, 500 to 7,000, 1,000 to 6,000, or 2,500 to 5,500. As the number average molecular weight of the prepolymer satisfies the above range, it is possible to efficiently increase the molecular weight of the polymer in the polycondensation reaction, thereby further enhancing the strength characteristics.

The number average molecular weight may be measured using gel permeation chromatography (GPC). Specifically, various data such as Mn, Mw, and Mp may be obtained by gel permeation chromatography. The molecular weight may be measured as a number average molecular weight (Mn) among them.

Thereafter, the prepolymer is subjected to a polycondensation reaction to prepare a biodegradable polyester resin (polymer).

The polycondensation reaction may be carried out at 180°C to 280°C and 1.0 Torr or less for 1 hour to 6 hours. For example, the polycondensation reaction may be carried out at 190°C to 270°C, 210°C to 260°C, or 230°C to 255°C, at 0.9 Torr or less, 0.7 Torr or less, 0.2 Torr to 1.0 Torr, 0.3 Torr to 0.9 Torr, or 0.5 Torr to 0.9 Torr, for 1.5 hours to 5.5 hours, 2 hours to 5 hours, or 3.5 hours to 4.5 hours.

The biodegradable polyester resin may have an intrinsic viscosity of 0.05 to 10 dl/gr.

When the biodegradable polyester resin is measured for melt viscosity with a rheometrics dynamic spectrometer (RDS) under a condition of 100 $s^{-1}$, it may be 1,000 to 30,000 poises.

The biodegradable polyester resin may have a number average molecular weight (Mn) of 40,000 or more. For example, the number average molecular weight of the biodegradable polyester resin may be 43,000 or more, 45,000 or more, or 40,000 to 70,000.

The biodegradable polyester resin may have a weight average molecular weight (Mw) of 60,000 or more. For example, the weight average molecular weight of the biodegradable polyester resin may be 65,000 or more, 75,000 or more, 80,000 or more, or 85,000 to 100,000.

The biodegradable polyester resin may have a polydispersity index (PDI) of 1.2 to 2.0. For example, the polydispersity index of the biodegradable polyester resin may be 1.5 to 1.9 or 1.6 to 1.8.

As the number average molecular weight, weight average molecular weight, or polydispersity index of the biodegradable polyester resin satisfies the above range, strength and processability can be further enhanced.

In addition, the biodegradable polyester resin may have an acid value of 1.8 mg KOH/g or less. For example, the acid value of the biodegradable polyester resin may be 1.5 mg KOH/g or less, 1.3 mg KOH/g or less, or 1.25 mg KOH/g or less. As the acid value of the biodegradable polyester resin satisfies the above range, improvement of the hydrolysis resistance can be maximized.

Thereafter, the biodegradable polyester resin and calcium carbonate are mixed to prepare a biodegradable resin composition.

Mixing of the biodegradable polyester resin and calcium carbonate may be appropriately selected according to the molding method (e.g., extrusion molding, injection molding, vacuum molding, or the like). For example, the biodegradable polyester resin and calcium carbonate may be melt-kneaded before being introduced to the hopper of a molding machine, or the biodegradable polyester resin and calcium carbonate may be melt-kneaded simultaneously with molding integrally with the molding machine. Melt-kneading is preferably carried out by uniformly dispersing calcium carbonate in the biodegradable polyester resin and kneading by applying high shear stress. For example, a kneader reactor, an extruder equipped with a single screw, or a twin screw kneader may preferably be used.

In addition, one or more of the plasticizers or additives may be additionally added in the mixing step.

The mixing step is composed of one or more mixing stages.

In an embodiment of a one-stage mixing, it may be composed of a single mixing for preparing a biodegradable resin composition comprising 61 to 80% by weight or 65 to 72% by weight of calcium carbonate based on the total weight of the biodegradable resin composition.

In another embodiment of a two-stage mixing, it may be composed of preliminary mixing for preparing a biodegradable resin composition comprising 61 to 80% by weight or 65 to 72% by weight of calcium carbonate based on the total weight of the biodegradable resin composition; and secondary mixing for preparing a biodegradable resin composition comprising 30 to 60% by weight, 30 to 60% by weight, or 45 to 55% by weight of calcium carbonate based on the total weight of the biodegradable resin composition.

The one or more stages of mixing may be a tandem continuous process.

The temperature of the mixing step may be 150 to 190°C, 150 to 180°C, or 160 to 180°C. If the temperature of the mixing step is within the above range, the torque required during mixing may be reduced, and thermal decomposition of the mixed biodegradable resin composition may be prevented.

Thereafter, pellets are prepared from the biodegradable resin composition.

The biodegradable resin composition is fed to an extruder equipped with a single screw or an extruder equipped with twin screws, extruded at a temperature of 150°C to 180°C, cut with a hot-cut pellet cutter, and cooled to 50°C or lower, 40°C or lower, 30°C or lower, 25°C or lower, 5 to 50°C, 10 to 30°C, 15 to 25°C, or 20 to 25°C, to prepare pellets.

The cutting step may be carried out using a pellet cutter without limitations as long as it is commonly used in the art, and the pellets may have various shapes.

Finally, the pellets are dried and melt-extruded.

The pellets are dried and melt-extruded to prepare a biodegradable polyester film or a biodegradable polyester sheet.

The drying may be carried out at 60°C to 100°C for 2 hours to 12 hours. Specifically, the drying may be carried out at 65°C to 95°C, 70°C to 90°C, or 75°C to 85°C, for 3 hours to 12 hours or 4 hours to 10 hours. As the drying process conditions of the pellets satisfy the above ranges, it is possible to further enhance the quality of a biodegradable polyester film thus produced.

The melt-extrusion may be carried out at 270°C or lower. For example, the melt-extrusion may be carried out at 265°C or lower, 260°C or lower, 255°C or lower, 130°C to 270°C, 130°C to 250°C, 140°C to 230°C, 150°C to 200°C, or 150°C to 180°C. The melt-extrusion may be carried out by a blown film process or a press process, but it is not limited thereto.

The torque during the melt-extrusion may be 100 N·m to 300 N·m or 150 N·m to 250 N·m.

**Mode for the Invention**

Hereinafter, the present invention will be described in more detail with reference to the following examples. But the following Examples are intended to illustrate the present invention, and the scope of the Examples is not limited thereto only.

**[Test Example]**

**Test Example 1: Isothermal weight loss**

For the pellets prepared from the biodegradable resin compositions of the Examples and Reference Examples, a change between the initial weight of pellets ($W_0$) and the weight ($W_1$) of the pellets after they were left under an isothermal condition of 210°C for 1 hour was measured. The isothermal weight loss was then calculated as ($W_0 - W_1$)/$W_0$ × 100.

**Test Example 2: Change in the content of calcium carbonate**

Each sample of the biodegradable resin compositions of the Examples and Reference Examples was subjected to heating (dynamic mode) to 600°C at a rate of 20°C/minute using TGA equipment, Q500 model of TA Instrument, and the content of residual Ca was measured, which was converted to a content of calcium carbonate ($CaCO_3$) in the pellets.

**Test Example 3: Glass transition temperature (Tg)**

Each sample of the biodegradable resin compositions of the Examples and Reference Examples was heated twice at a rate of 20°C per minute using a DSC device. Tg of the sample was calculated from the result of differential scanning calorimetry analysis.

**Test Example 4: Crystallization temperature (Tc) and heat of crystal fusion (△Hmc)**

Each sample of the biodegradable resin compositions of the Examples and Reference Examples was heated from 40°C to 180°C at a rate of 10°C/minute using a differential scanning calorimeter (DSC), isothermal was performed for 5 minutes to first remove the thermal history, the temperature was then lowered from 180°C to -50°C at a rate of 10°C/minute, and isothermal was performed for 5 minutes as a second cooling procedure.
A heat flow graph with respect to temperature was prepared in the second cooling procedure from which the crystallization temperature (°C), crystal peak, and heat of crystal fusion (J/g) were confirmed.

**Test Example 5: Tensile strength**

A sample of the biodegradable polyester film or sheet of the Examples and Reference Examples was cut to a length of 100 mm and a width of 15 mm. According to ASTM D882, it was set in a universal testing machine (UTM; 4206-001) of INSTRON such that the distance between chucks was 50 mm. Tensile strength was measured at a tensile speed of 500 mm/minute.

**Test Example 6: Elongation**

A sample of the biodegradable polyester film or sheet of the Examples and Reference Examples was cut to a length of 100 mm and a width of 15 mm. The maximum deformation immediately before breakage was measured at a rate of 500 mm/minute using a universal testing machine (UTM; 4206-001) of INSTRON. Elongation was calculated as the ratio of the maximum deformation to the initial length.

**Test Example 7: Tear strength**

Each sample of the biodegradable polyester films of the Examples and Reference Examples was cut according to KPS M 1001-0806. The maximum load applied until the sample was broken at a constant rate of 500 mm/minute was measured. Tear strength was calculated according to the following Equation 2.

Tear strength (N/cm) = maximum load until breakage (N) / thickness of specimen (cm)          [Equation 2]

**Test Example 8: Modulus**

Each sample of the biodegradable polyester sheets of the Examples and Reference Examples was cut to a length of 100 mm and a width of 15 mm. Modulus was measured using a universal testing machine (UTM; 4206-001) of INSTRON according to ASTM D 882.

**[Example]**

**Preparation of a biodegradable polyester resin**

**Preparation Example 1**

50% by mole of 1,4-butanediol and 50% by mole of dimethyl terephthalic acid were mixed. 200 ppm of tetrabutyl titanate (manufacturer: Aldrich) as a titanium-based catalyst was added to the mixture. The mixture was then subjected to a primary esterification reaction at 210°C and atmospheric pressure for 2 hours.

50% by mole of 1,4-butanediol, 50% by mole of adipic acid, 0.1% by weight of pretreated nanocellulose, and 150 ppm of tetrabutyl titanate (manufacturer: Aldrich) as a titanium-based catalyst were added to the reaction product. The mixture was then subjected to a secondary esterification reaction at 210°C and atmospheric pressure for 2 hours to prepare a prepolymer having a number average molecular weight of 5,000.

200 ppm of tetrabutyl titanate (manufacturer: Aldrich) as a polycondensation catalyst was added to the prepolymer. The temperature was raised to 240°C, followed by a polycondensation reaction at 0.5 Torr for 4 hours, to prepare a biodegradable polyester resin having a number average molecular weight of 50,000.

**Preparation Example 2**

A biodegradable polyester resin of Preparation Example 2 was prepared in the same manner as Preparation Example 1, except that the pretreated nanocellulose was not used.

Alternatively, A400 of Kingfa may be used as a PBAT resin having the same composition without nanocellulose as a substitute for Preparation Example 2.

The mechanical and thermal properties of the biodegradable polyester resins of Preparation Examples 1 and 2 of the present invention are shown in Table 1.

[Table 1]

| | | Preparation Examples 1 and 2 |
|---|---|---|
| IV (dl/gr) | | 1.5 to 2.0 |
| RDS (100 s$^{-1}$) | 180°C | 12,000 to 9,000 |
| | 190°C | 11,000 to 8,000 |
| | 200°C | 10,000 to 7,000 |
| | 210°C | 9,000 to 6,000 |
| | 220°C | 8,000 to 5,000 |
| DSC (2$^{nd}$ heat/cool, 20°C/min) | Tg | -40 to -20°C |
| | Tcc | - |
| | Tm | 100 to 140°C |
| | Tmc | 20 to 40°C |
| Isothermal weight loss (1 hr) | 180°C | - |
| | 190°C | 0.1 to 0.5% |
| | 200°C | - |
| | 210°C | 0.3 to 0.7% |
| | 220°C | - |
| | 230°C | 0.8 to 1.0% |
| GPC | Mn | 40,000 to 70,000 |
| | Mw | 80,000 to 120,000 |
| | PDI | 1.2 to 2.5 |

(continued)

| | Preparation Examples 1 and 2 |
|---|---|
| Terminal group (COOH): chips eq/$10^6$ gr PLA (4032D): 15.32 | 5 to 30 |

## Preparation of a biodegradable resin composition

### Examples A1 to A8

Except that the components of the composition were changed according to Tables 2 and 3 below, calcium carbonate (WS-2200) and at least one selected from the group consisting of a plasticizer (acetylated monoglyceride, Biocizer), additive 1 (polycaprolactone; PCL), additive 2 (polylactic acid; PLA), antioxidant 1 (phenolic antioxidant, AO-60), and antioxidant 2 (phosphorus antioxidant, 2112 (AO)) were added to the polymer of Preparation Example 1 or Preparation Example 2, which was fed to a kneader reactor and kneaded at a temperature of 175°C, extruded with an extruder equipped with a single screw, cut with a hot-cut pellet cutter, and cooled to prepare a biodegradable resin composition in the form of pellets.

### Examples A9 to A10

The composition of Example A7 or Example A8 kneaded in the kneader reactor was fed to an extruder equipped with twin screws, and the polymer of Preparation Example 1 or Preparation Example 2 was additionally added thereto, thereby adjusting the contents of the components of the composition as shown in Table 3 below. It was extruded with an extruder equipped with a single screw, cut with a hot-cut pellet cutter, and cooled to prepare a biodegradable resin composition in the form of pellets.

### Examples A11 to A13

Except that the components of the composition were changed according to Table 4 below, PLA, calcium carbonate (WS-2200), and additives comprising a plasticizer (acetylated monoglyceride), a stabilizer (tris-2,4-tertiary-butyl phenyl phosphate, 2112 RG grade), and a chain extender (Joncryl) were added to the polymer of Preparation Example 1 or Preparation Example 2, which was fed to a kneader reactor and kneaded at a temperature of 175°C, extruded with an extruder equipped with a single screw, cut with a hot-cut pellet cutter, and cooled to prepare a biodegradable resin composition in the form of pellets.

### Reference Example A1 and A2

100% by weight of the polymer of Preparation Example 1 (Reference Example A1) or Preparation Example 2 (Reference Example A2) was fed to a kneader reactor and kneaded at a temperature of 175°C, extruded with an extruder equipped with a single screw, cut with a hot-cut pellet cutter, and cooled to prepare a biodegradable resin composition in the form of pellets.

[Table 2]

| (% by weight) | Biodegradable polyester resin | | Calcium carbonate (CaCO$_3$) | Plasticizer | PCL | PLA |
|---|---|---|---|---|---|---|
| | Preparation Example 1 | Preparation Example 2 | | | | |
| Example A1 | 35 | - | 65 | - | - | - |
| Example A2 | - | 35 | 65 | - | - | - |
| Example A3 | 20 | - | 70 | 10 | - | - |
| Example A4 | 20 | - | 70 | - | - | 10 |
| Example A5 | - | 20 | 70 | 10 | - | - |
| Example A6 | - | 20 | 70 | 5 | 5 | - |

[Table 3]

| (% by weight) | Biodegradable polyester resin | | Calcium carbonate (CaCO₃) | Plasticizer | Antioxidant | |
|---|---|---|---|---|---|---|
| | Preparation Example 1 | Preparation Example 2 | | | Phenol-based | Phosphorous-based |
| Example A7 | 26.82 | - | 70 | 2.9 | 0.07 | 0.21 |
| Example A8 | - | 26.82 | 70 | 2.9 | 0.07 | 0.21 |
| Example A9 | 50.91 | - | 47 | 1.9 | 0.05 | 0.14 |
| Example A10 | - | 50.91 | 47 | 1.9 | 0.05 | 0.14 |

[Table 4]

| Item (% by weight) | Biodegradable polyester resin | | Calcium carbonate (CaCO₃) | PLA | Additive |
|---|---|---|---|---|---|
| | Preparation Example 1 | Preparation Example 2 | | | |
| Example A11 | 34.8 | - | 49 | 14 | 2.2 |
| Example A12 | - | 34.8 | 49 | 14 | 2.2 |
| Example A13 | 30 | - | 70 | - | 2.2 |

Table 5 shows the measurement results of the thermal properties of the biodegradable resin compositions of the present invention.

[Table 5]

| Item | TGA | | DSC | | |
|---|---|---|---|---|---|
| | Isothermal weight loss (210°C, 1 hr) | Change in the content of calcium carbonate | Tg (°C) | Heat of crystal fusion at 70 to 90°C (J/g) | Heat of crystal fusion at 100 to 150°C (J/g) |
| Example A1 | 0.5% or less | 64.5% | -21.3 | 0.03 | 8.2 |
| Example A2 | 0.5% or less | 65.5% | -23.1 | 0.02 | 2.5 |
| Example A3 | 2.6% | 69.3% | -23.4 | 0.01 | 2.3 |
| Example A4 | 0.5% or less | 70.9% | -22.4 | 0.01 | 1.5 |
| Example A5 | 2.6% | 68.5% | -23.5 | 0 | 1.8 |
| Example A6 | 2.1% | 70.5% | - | 0 | 0.6 |
| Example A7 | 1.3% | 69.5% | -20.6 | 0 | 6.9 |
| Example A8 | 1.1% | 71.1% | -19.8 | 0.1 | 5.9 |
| Example A9 | 0.9% | 47.5% | -22.9 | 0.3 | 10.2 |
| Example A10 | 1.2% | 46.9% | -24.1 | 0.5 | 11.3 |
| Reference Example A1 | - | - | -24.2 | 1 | 15 |
| Reference Example A2 | - | - | - | 1 | 15 |

The biodegradable resin compositions of Examples A1 to A10 each had a low weight loss at a high temperature (210°C) despite a high content of calcium carbonate, as compared with the biodegradable resin compositions of Reference Examples A1 and A2 comprising 100% by weight of the resin of Preparation Example 1 or 2. In particular, Examples A1, A2, A4, and A9 each showed a weight loss of 1% or less. In the tests for measuring a change in the content of calcium carbonate, the change in the content of calcium carbonate was 2.5% or less in the biodegradable resin compositions of Examples A1 to A10, indicating that they can maintain a high content of CaCOs even after high-temperature processing.

In addition, the biodegradable resin compositions of Examples A1 to A10 each had the effect of reducing the glass transition temperature (Tg), as compared with the biodegradable resin compositions of Reference Examples A1 and A2 comprising 100% by weight of the resin of Preparation Example 1 or 2.

The biodegradable resin compositions of Examples A1, A3, A4, A7, and A9 showed a reduction of 70% to 100% in the heat of crystal fusion at 70°C to 90°C and a reduction of 32% to 90% in the heat of crystal fusion at 100°C to 150°C with respect to Reference Example A1.

The biodegradable resin compositions of Examples A2, A5, A6, A8, and A10 showed a reduction of 50% to 100% in the heat of crystal fusion at 70°C to 90°C and a reduction of 24.7% to 96% in the heat of crystal fusion at 100°C to 150°C with respect to Reference Example A2.

**Preparation of a biodegradable polyester film**

**Examples B1 to B4 and Reference Example B1**

The biodegradable polyester resin pellets prepared from each of the biodegradable resin compositions of Examples A9 to A13 shown in Tables 3 and 4 above were dried at 80°C for 5 hours and then melt-extruded at 160°C using a blown film extruder (Blown Film Extrusion Line, manufacturer: Eugene Engineering) to prepare a biodegradable polyester film having a thickness of 50 μm.

Table 6 shows the measurement results of the mechanical properties of the biodegradable polyester films of the present invention.

[Table 6]

| | Biodegradable resin composition | Tensile strength (MPa) | | Elongation (%) | | Tear strength (N/mm) | |
|---|---|---|---|---|---|---|---|
| | | MD | TD | MD | TD | MD | TD |
| Example B1 | Example A9 | 20.7 | 10.8 | 164 | 370 | 132 | 108 |
| Example B2 | Example A10 | 16.1 | 16.1 | 374 | 543 | 112 | 92 |
| Example B3 | Example A11 | 11.3 | 12.8 | 120 | 180 | 95 | 84 |
| Example B4 | Example A12 | 9.2 | 13.1 | 135 | 110 | 90 | 85 |
| Reference Example B1 | Example A13 | 3.5 | 5.6 | 80 | 78 | 60 | 72 |

The biodegradable polyester films comprising a high content of calcium carbonate in Examples B1 and B2 were each excellent in tensile strength and elongation and good in tear strength. Although the biodegradable polyester films comprising a high content of calcium carbonate in Examples B3 and B4 were each reduced in tensile strength, elongation, and tear strength due to the addition of PLA, as compared with Examples B 1 and B2, they were maintained at least at a certain level required for commercialization.

**Preparation of a biodegradable polyester sheet**

**Sheets 1 to 4**

Pellets prepared from Preparation Example 1, Preparation Example 2 (Kingfa, A400), Resin A (JINHUI, Ecoworld), Resin B (TUNHE, TH80IT), or Resin C (BASF, Ecoflex C1200) were dried at 80°C for 5 hours and melt-extruded under the molding conditions of Tables 7 and 8 to prepare a biodegradable polyester sheet having a thickness of 20 μm.

**Example C1 and Comparative Examples C1 and C2**

Except that the components of the composition were changed according to Table 7 below, calcium carbonate was added to the polymer of Preparation Example 1, Resin A (JINHUI, Ecoworld), or Resin B (TUNHE, TH80IT) to prepare a biodegradable resin composition in the same manner as in Example A1, from which a biodegradable polyester sheet was prepared in the same manner as Sheet 1.

**Example C2 and C13**

Except that the components of the composition were changed according to Table 8 below, calcium carbonate (WS-2200) and at least one selected from the group consisting of a plasticizer (acetylated monoglyceride, Biocizer), polycaprolactone (PCL), or poly(lactic acid) (PLA) were added to the biodegradable polyester resin of Preparation Example 1 or Preparation Example 2 to prepare a biodegradable resin composition in the same manner as in Example A1, from which a biodegradable polyester sheet was prepared in the same manner as Sheet 1.

[Table 7]

| (%by weight) | Biodegradable polyester resin | | | Calcium carbonate | Molding condition | | Physical properties | | |
|---|---|---|---|---|---|---|---|---|---|
| | Preparation Example 1 | Resin A | Resin B | | Temp. (°C) | Torque (N·m) | Tensile strength (Tb, MPa) | Elongation (Eb, %) | Modulus (MPa) |
| Sheet 1 | 100 | - | - | - | 160 | 146 | 41.2 | 774 | 107.2 |
| Sheet 3 | - | 100 | - | - | 160 | 180 | 42.8 | 867 | 82.3 |
| Sheet 4 | - | - | 100 | - | 160 | 232 | 50.7 | 867 | 80.1 |
| Example C1 | 45 | - | - | 55 | 210 | 200 | 6.3 | 25 | 324.4 |
| Comparative Example C1 | - | 45 | - | 55 | 210 | 240 | 6.1 | 25 | 296.9 |
| Comparative Example C2 | - | - | 45 | 55 | 210 | 250 | 5.0 | 76 | 319.4 |

For the conventional biodegradable polyester sheets (Comparative Examples C1 and C2) containing a high content of calcium carbonate, high torque was required under the mold conditions required for the preparation thereof, which was disadvantageous in terms of energy and cost. The decrease in tensile strength or elongation thereof was very large as compared with Sheets 3 and 4; thus, they were not suitable for preparing molded articles. In contrast, for the biodegradable polyester sheet of the present invention (Example C1), the energy and cost required for molding could be reduced. In addition, in the biodegradable polyester film of the present invention, which comprises a high content of calcium carbonate, it is possible to reduce the cost of raw materials, to enhance the biodegradability of the polyester film, and to control the acidity of the degraded substances.

[Table 8]

| (% by weight) | Biodegradable polyester resin | | Calcium carbonate (CaCO$_3$) | Plasticizer | PCL | PLA | Tensile strength (MPa) | Elongation (%) |
|---|---|---|---|---|---|---|---|---|
| | Preparation Example 1 | Preparation Example 2 | | | | | | |
| Sheet 1 | 100 | - | - | - | - | - | 43.4 | 743 |
| Sheet 2 | - | 100 | - | - | - | - | 42.0 | 683 |
| Example C2 | 16.45 | 53 | 30.55 | - | - | - | 20.9 | 330 |
| Example C3 | 29.4 | 16 | 54.6 | - | - | - | 10.9 | 18 |
| Example C4 | - | 69.45 | 30.55 | - | - | - | 19.1 | 443 |
| Example C5 | - | 45.4 | 54.6 | - | - | - | 9.6 | 73 |
| Example C6 | 8.8 | 56 | 30.8 | 4.4 | - | - | 26.5 | 287 |

(continued)

| (% by weight) | Biodegradable polyester resin | | Calcium carbonate (CaCO₃) | Plasticizer | PCL | PLA | Tensile strength (MPa) | Elongation (%) |
|---|---|---|---|---|---|---|---|---|
| | Preparation Example 1 | Preparation Example 2 | | | | | | |
| Example C7 | 15.6 | 22 | 54.6 | 7.8 | - | - | 11.7 | 253 |
| Example C8 | 8.8 | 56 | 30.8 | - | - | 4.4 | 24.0 | 297 |
| Example C9 | 15.6 | 22 | 54.6 | - | - | 7.8 | 12.1 | 165 |
| Example C10 | - | 64.8 | 30.8 | 4.4 | - | - | 23.8 | 325 |
| Example C11 | - | 37.6 | 54.6 | 7.8 | - | - | 14.5 | 292 |
| Example C12 | - | 64.8 | 30.8 | 2.2 | 2.2 | - | 24.5 | 362 |
| Example C13 | - | 37.6 | 54.6 | 3.9 | 3.9 | - | 14.2 | 309 |

For the conventional biodegradable polyester sheets containing a high content of calcium carbonate, tensile strength or elongation was significantly reduced (Comparative Examples C1 and C2 in Table 7); thus, they were not suitable for preparing molded articles. In contrast, the biodegradable polyester sheets of the present invention (Examples C2 to C13 in Table 8) were able to maintain tensile strength and elongation at least at a certain level as compared with Sheet 1 or Sheet 2.

**Claims**

1. A biodegradable resin composition, which comprises a biodegradable polyester resin and calcium carbonate (CaCO₃),
   wherein the reduction rate of crystal peak represented by the following Equation 1 is 50% or more:

$$[\text{Equation 1}]$$

$$\text{Reduction rate of crystal peak} = (R_p - C_p)/R_p$$

   in Equation 1, $R_p$ is the heat of crystal fusion (J/g) of the biodegradable polyester resin in the temperature range of 70 to 90°C as measured using a differential scanning calorimeter (DSC) while the temperature is elevated from 40°C to 180°C at a rate of 10°C/minute and then lowered to -50°C at a rate of 10°C/minute, and $C_p$ is the heat of crystal fusion (J/g) of the biodegradable resin composition as measured under the same conditions as above.

2. The biodegradable resin composition of claim 1, which comprises calcium carbonate (CaCO₃) in an amount of 30 to 80% by weight based on the total weight of the biodegradable resin composition.

3. The biodegradable resin composition of claim 1, which comprises calcium carbonate (CaCO₃) in an amount of 40 to 75% by weight based on the total weight of the biodegradable resin composition.

4. The biodegradable resin composition of claim 1, wherein the biodegradable resin composition comprises a plasticizer and an antioxidant,

   the plasticizer comprises at least one selected from the group consisting of glycerol, acrylate, glycerin, glycerol monostearate, and sorbitol, and

the antioxidant comprises at least two selected from the group consisting of a phosphorus-based antioxidant, a phenol-based antioxidant, or a pentaerythritol-based antioxidant.

5. The biodegradable resin composition of claim 4, which comprises the plasticizer in an amount of 1 to 3% by weight and the antioxidant in an amount of 0.01 to 4% by weight, based on the total weight of the biodegradable resin composition.

6. The biodegradable resin composition of claim 4, wherein the antioxidant comprises the phosphorus-based antioxidant and the phenol-based antioxidant, and the weight ratio of the phosphorus-based antioxidant and the phenol-based antioxidant is 1:10 to 10:1.

7. The biodegradable resin composition of claim 1, wherein the biodegradable polyester resin comprises nanocellulose in an amount of 0.01 to 3% by weight based on the total weight of the biodegradable polyester resin.

8. The biodegradable resin composition of claim 1, wherein the biodegradable resin composition further comprises a chain extender, and the chain extender is employed in an amount of 0.01 to 1% by weight based on the total weight of the biodegradable resin composition.

9. The biodegradable resin composition of claim 1, wherein the biodegradable resin composition further comprises at least one dispersant selected from the group consisting of poly(lactic acid), poly(glycolic acid), polycaprolactone, and polyhydroxyalkanoate, and the dispersant is employed in an amount of 1 to 20% by weight based on the total weight of the biodegradable resin composition.

10. The biodegradable resin composition of claim 1, wherein when the biodegradable resin composition is maintained at an isothermal temperature of 210°C for 1 hour, the isothermal weight loss of the biodegradable resin composition is 5% or less.

11. The biodegradable resin composition of claim 1, wherein when the biodegradable resin composition is heated at a rate of 20°C/minute, the change in the content of calcium carbonate in the biodegradable resin composition at 600°C is 5% or less.

12. A biodegradable polyester sheet, which comprises a biodegradable resin composition comprising a biodegradable polyester resin and calcium carbonate ($CaCO_3$),
wherein the reduction rate of crystal peak of the biodegradable resin composition represented by the following Equation 1 is 50% or more:

[Equation 1]

$$\text{Reduction rate of crystal peak} = (R_p - C_p)/R_p$$

in Equation 1, $R_p$ is the heat of crystal fusion (J/g) of the biodegradable polyester resin in the temperature range of 70 to 90°C as measured using a differential scanning calorimeter (DSC) while the temperature is elevated from 40°C to 180°C at a rate of 10°C/minute and then lowered to -50°C at a rate of 10°C/minute, and $C_p$ is the heat of crystal fusion (J/g) of the biodegradable resin composition as measured under the same conditions as above.

13. The biodegradable polyester film of claim 12, which has a tensile strength of 5 MPa or more, an elongation of 85% or more, and a tear strength of 75 N/mm or more.

14. A biodegradable polyester sheet, which comprises a biodegradable resin composition comprising a biodegradable polyester resin and calcium carbonate (CaCOs),
wherein the reduction rate of crystal peak of the biodegradable resin composition represented by the following Equation 1 is 50% or more:

[Equation 1]

$$\text{Reduction rate of crystal peak} = (R_p - C_p)/R_p$$

in Equation 1, $R_p$ is the heat of crystal fusion (J/g) of the biodegradable polyester resin in the temperature range of 70 to 90°C as measured using a differential scanning calorimeter (DSC) while the temperature is elevated from 40°C to 180°C at a rate of 10°C/minute and then lowered to -50°C at a rate of 10°C/minute, and $C_p$ is the heat of crystal fusion (J/g) of the biodegradable resin composition as measured under the same conditions as above.

15. The biodegradable polyester sheet of claim 14, which has a tensile strength of 5 MPa or more and an elongation of 10% or more.

[Fig. 1]

## INTERNATIONAL SEARCH REPORT

| International application No. |
| --- |
| **PCT/KR2022/016055** |

**A.    CLASSIFICATION OF SUBJECT MATTER**

**C08K 3/26**(2006.01)i; **C08K 5/098**(2006.01)i; **C08K 5/10**(2006.01)i; **C08K 5/103**(2006.01)i; **C08L 67/02**(2006.01)i

According to International Patent Classification (IPC) or to both national classification and IPC

**B.    FIELDS SEARCHED**

Minimum documentation searched (classification system followed by classification symbols)

C08K 3/26(2006.01); B29C 48/00(2019.01); B32B 27/08(2006.01); B32B 27/20(2006.01); C08K 13/02(2006.01); C08K 3/22(2006.01); C08L 67/02(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성 수지(biodegradable resin), 탄산칼슘(calcium carbonate), 융해열(heat of fusion)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 6916571 B1 (TBM CO., LTD.) 11 August 2021 (2021-08-11)<br>See claims 1-6; paragraphs [0009], [0069] and [0091]-[0120]; and table 1. | 1-15 |
| A | KR 10-2128081 B1 (SAEHANPACK) 30 June 2020 (2020-06-30)<br>See entire document. | 1-15 |
| A | KR 10-2021-0038745 A (HONG, Seung Hoi et al.) 08 April 2021 (2021-04-08)<br>See entire document. | 1-15 |
| A | KR 10-2020-0047171 A (AU CO., LTD. et al.) 07 May 2020 (2020-05-07)<br>See entire document. | 1-15 |
| A | KR 10-2018-0054723 A (KINGFA SCI. & TECH. CO., LTD.) 24 May 2018 (2018-05-24)<br>See entire document. | 1-15 |

☐ Further documents are listed in the continuation of Box C.        ☑ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **30 January 2023** | **30 January 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/016055**

| Patent document cited in search report | | | Publication date (day/month/year) | Patent family member(s) | | | Publication date (day/month/year) |
|---|---|---|---|---|---|---|---|
| JP | 6916571 | B1 | 11 August 2021 | CN | 114364743 | A | 15 April 2022 |
| | | | | EP | 3981830 | A1 | 13 April 2022 |
| | | | | EP | 3981830 | A4 | 24 August 2022 |
| | | | | JP | 2022-149809 | A | 07 October 2022 |
| | | | | KR | 10-2380168 | B1 | 29 March 2022 |
| | | | | US | 2022-0325039 | A1 | 13 October 2022 |
| | | | | WO | 2022-039282 | A1 | 24 February 2022 |
| KR | 10-2128081 | B1 | 30 June 2020 | None | | | |
| KR | 10-2021-0038745 | A | 08 April 2021 | KR | 10-2324258 | B1 | 11 November 2021 |
| KR | 10-2020-0047171 | A | 07 May 2020 | KR | 10-2198513 | B1 | 05 January 2021 |
| KR | 10-2018-0054723 | A | 24 May 2018 | CN | 106084681 | A | 09 November 2016 |
| | | | | CN | 106084681 | B | 18 May 2018 |
| | | | | EP | 3315554 | A1 | 02 May 2018 |
| | | | | EP | 3315554 | B1 | 13 November 2019 |
| | | | | ES | 2769231 | T3 | 25 June 2020 |
| | | | | JP | 2018-527416 | A | 20 September 2018 |
| | | | | JP | 6522788 | B2 | 29 May 2019 |
| | | | | KR | 10-2037617 | B1 | 28 October 2019 |
| | | | | US | 10472515 | B2 | 12 November 2019 |
| | | | | US | 2018-0298187 | A1 | 18 October 2018 |
| | | | | WO | 2018-014560 | A1 | 25 January 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9096758 B